# EUROPEAN PATENT APPLICATION

(11) **EP 1 983 159 A2**
(43) Date of publication of application: **22.10.2008**
(21) Application number: 08103617.0
(22) Date of filing: 18.04.2008
(51) Int. Cl.: F01D 5/06, F01D 5/30

(54) **Shrouded single crystal dual alloy turbine disk**

(30) Priority: 20.04.2007 US 737949
(71) Applicant: Honeywell International Inc., Morristown NJ 07960 (US)
(72) Inventor: Perron, James S., Fountain Hills, AZ 85268 (US); Baker, William C., Phoenix, AZ 85020 (US); Rice, Derek A., Phoenix, AZ 85044 (US)
(74) Representative: Buckley, Guy Julian

(57) **Abstract**

A turbine engine component for a gas turbine engine includes an inner disk, an outer shroud, and a plurality of blades. Each blade comprises a blade root and an airfoil body. The blade root is plated at least in part with a noble metal, and is coupled to the inner disk. The airfoil body extends at least partially between the blade root and the outer shroud.

## Description

### FIELD OF THE INVENTION

The present invention relates to gas turbine engines and, more particularly, to improved gas turbine engine components.

### BACKGROUND OF THE INVENTION

A gas turbine engine may be used to power various types of vehicles and systems. A particular type of gas turbine engine that may be used to power aircraft is a turbofan gas turbine engine. A turbofan gas turbine engine may include, for example, five major sections, a fan section, a compressor section, a combustor section, a turbine section, and an exhaust section.

The fan section is positioned at the front, or "inlet" section of the engine, and includes a fan that induces air from the surrounding environment into the engine, and accelerates a fraction of this air toward the compressor section. The remaining fraction of air induced into the fan section is accelerated into and through a bypass plenum, and out the exhaust section. The compressor section raises the pressure of the air it receives from the fan section to a relatively high level. The compressed air from the compressor section then enters the combustor section, where a ring of fuel nozzles injects a steady stream of fuel. The injected fuel is ignited by a burner, which significantly increases the energy of the compressed air.

The high-energy compressed air from the combustor section then flows into and through the turbine section, causing radially mounted turbine blades to rotate and generate energy. Specifically, high-energy compressed air impinges on turbine blades, causing the turbine to rotate. The air exiting the turbine section is exhausted from the engine via the exhaust section, and the energy remaining in this exhaust air aids the thrust generated by the air flowing through the bypass plenum.

Gas turbine engines, such as the one described above, typically operate more efficiently at increasingly higher temperatures. However, some turbine engine components, such as turbine blades and disks may experience greater degradation at higher temperatures. Certain engine components of a single crystal composition, and/or of certain other compositions, may be better suited for higher temperatures. However, gas turbine disks fabricated using individually cast and inserted single crystal airfoils tend to be expensive.

To mitigate the cost of individually casting and inserting blades, diffusion bonding processes have been developed to join blade rings to turbine disks. Blade rings are typically one piece castings comprising a rotor set of turbine blades. However, current casting technology is generally limited to equiaxed fine grain cast materials. In addition, individually cast and inserted blades tend not to be shrouded, which may result in less than optimal engine performance, due to possible leakage, and it may be more difficult to use such blades in relatively high operating temperatures.

Accordingly, there is a need for a dual alloy turbine rotor component that is made of a material, such as a single crystal composition, that is especially well suited for higher temperatures, that can operate with increased efficiency, and/or that includes an outer shroud ring with minimized air leakage. The present invention addresses one or more of these needs.

### SUMMARY OF THE INVENTION

The present invention provides a turbine engine component for a gas turbine engine. In one embodiment, and by way of example only, the turbine engine component comprises an inner disk, an outer shroud, and a plurality of blades. Each blade comprises a blade root and an airfoil body. The blade root is plated at least in part with a noble metal, and is coupled to the inner disk. The airfoil body extends at least partially between the blade root and the outer shroud.

The invention also provides a gas turbine engine. In one embodiment, and by way of example only, the gas turbine engine comprises a compressor, a combustor, and a turbine. The compressor has an inlet and an outlet, and is operable to supply compressed air. The combustor is coupled to receive at least a portion of the compressed air from the compressor outlet, and is operable to supply combusted air. The turbine is coupled to receive the combusted air from the combustor and at least a portion of the compressed air from the compressor. The turbine comprises an inner disk, an outer shroud, and a plurality of blades. Each blade comprises a blade root and an airfoil body. The blade root is plated at least in part with a noble metal, and is coupled to the inner disk. The airfoil body extends at least partially between the blade root and the outer shroud.

The invention also provides a method of manufacturing a turbine engine component. In one embodiment, and by way of example only, the method comprises the steps of casting a plurality of blades, plating the blade root of each blade at least in part with a noble metal, and diffusion bonding the blade root of each blade to the inner disk. Each blade includes a blade root configured to be coupled to an inner disk.

Other independent features and advantages of the preferred airfoil and method will become apparent from the following detailed description, taken in conjunction with the accompanying drawings which illustrate, by way of example, the principles of the invention.

### BRIEF DESCRIPTION OF THE DRAWINGS

FIG. 1 is a simplified cross section side view of an exemplary multi-spool turbofan gas turbine jet engine according to an embodiment of the present invention;

FIG. 2 is a simplified cross section view of a turbine rotor component that may be used in the engine of FIG. 1;

FIG. 3 is a flowchart of a process that may used to manufacture the turbine rotor component of FIG. 2;

FIGs. 4A - 4D are simplified schematic representations of a portion of a first embodiment of the turbine rotor component of FIG. 2, shown at various stages of one embodiment of the process of FIG. 3;

FIGs. 5A and 5B depict alternative embodiments of the process of FIG. 3;

FIG. 6 is a diagram of a blade, with an as-cast segmented shroud, that may be used in a second embodiment of the turbine rotor component of FIG. 2;

FIG. 7 is a diagram of bi-cast blade ring, with an as-cast shroud, depicted as used in the second embodiment of the turbine rotor component of FIG. 2;

FIG. 8 is a machined bi-cast blade ring with a segmented as-cast shroud, depicted as used in the second embodiment of the turbine rotor component of FIG. 2;

FIG. 9 is a diagram of a bi-cast dual alloy turbine disk with an as-cast segmented shroud, depicted as used in the second embodiment of the turbine rotor component of FIG. 2; and

FIG. 10 is a diagram of a bi-cast blade ring, depicted as used in the first embodiment of the turbine rotor component of FIG. 2.

### DETAILED DESCRIPTION OF A PREFERRED EMBODIMENT

Before proceeding with the detailed description, it is to be appreciated that the described embodiment is not limited to use in conjunction with a particular type of turbine engine. Thus, although the present embodiment is, for convenience of explanation, depicted and described as being implemented in a multi-spool turbofan gas turbine jet engine, it will be appreciated that it can be implemented in various other types of turbines, and in various other systems and environments. For example, various embodiments can be implemented in connection with turbines used in auxiliary power units, among any one of a number of other different implementations.

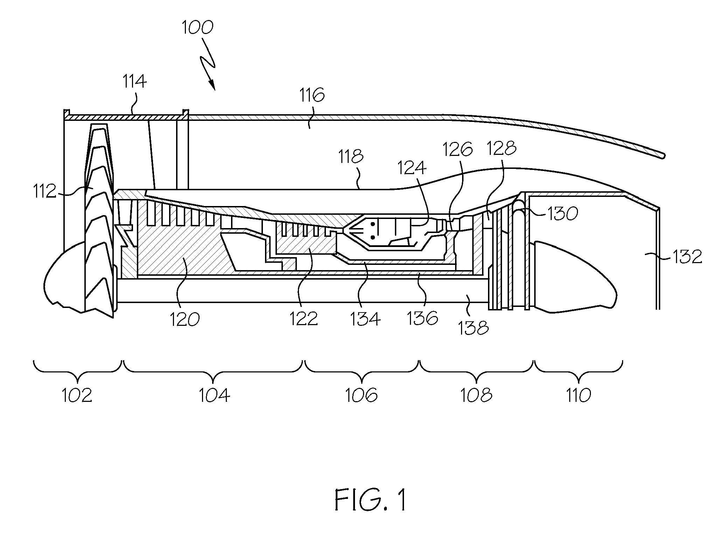

An exemplary embodiment of a multi-spool turbofan gas turbine jet engine 100 is depicted in FIG. 1, and includes an intake section 102, a compressor section 104, a combustion section 106, a turbine section 108, and an exhaust section 110. The intake section 102 includes a fan 112, which is mounted in a fan case 114. The fan 112 draws air into the intake section 102 and accelerates it. A fraction of the accelerated air exhausted from the fan 112 is directed through a bypass section 116 disposed between the fan case 114 and an engine cowl 118, and provides a forward thrust. The remaining fraction of air exhausted from the fan 112 is directed into the compressor section 104.

The compressor section 104 includes two compressors, an intermediate pressure compressor 120, and a high pressure compressor 122. The intermediate pressure compressor 120 raises the pressure of the air directed into it from the fan 112, and directs the compressed air into the high pressure compressor 122. The high pressure compressor 122 compresses the air still further, and directs a majority of the high pressure air into the combustion section 106. In addition, a fraction of the compressed air bypasses the combustion section 106 and is used to cool, among other components, turbine blades in the turbine section 108. In the combustion section 106, which includes an annular combustor 124, the high pressure air is mixed with fuel and combusted. The high-temperature combusted air is then directed into the turbine section 108.

The turbine section 108 includes three turbines disposed in axial flow series, a high pressure turbine 126, an intermediate pressure turbine 128, and a low pressure turbine 130. However, it will be appreciated that the number of turbines, and/or the configurations thereof, may vary, as may the number and/or configurations of various other components of the exemplary engine 100. The high-temperature combusted air from the combustion section 106 expands through each turbine, causing it to rotate. The air is then exhausted through a propulsion nozzle 132 disposed in the exhaust section 110, providing addition forward thrust. As the turbines rotate, each drives equipment in the engine 100 via concentrically disposed shafts or spools. Specifically, the high pressure turbine 126 drives the high pressure compressor 122 via a high pressure spool 134, the intermediate pressure turbine 128 drives the intermediate pressure compressor 120 via an intermediate pressure spool 136, and the low pressure turbine 130 drives the fan 112 via a low pressure spool 138.

Each of the turbines 126-130 in the turbine section 108 includes a plurality of stators (not shown in FIG. 1) and rotary blades (not shown in FIG. 1). The stators are used to direct a portion of the combusted air from the combustion section 106 onto the rotary blades. The rotary blades in turn cause the associate turbines 126-130 to rotate.

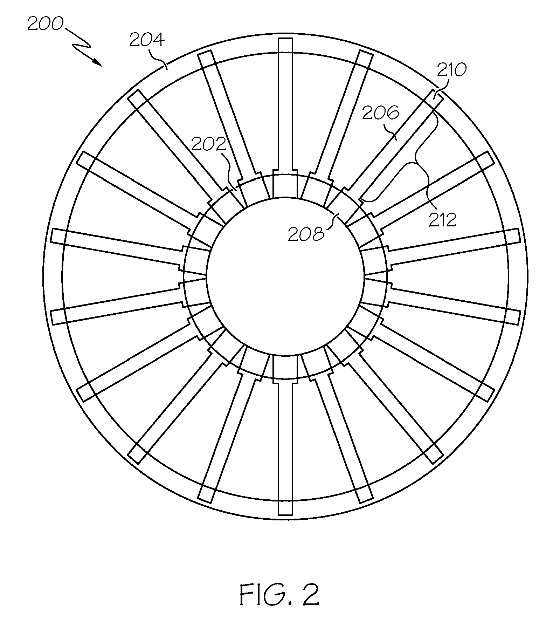

FIG. 2 provides a simplified cross section view of a first exemplary embodiment of a turbine rotor component 200 that can be used in any one of a number of different types of turbines, including, among others, high, intermediate, and low pressure turbines 126, 128, and 130 of the turbine section 108 of the engine 100 of FIG. 1. As shown in FIG. 2, the turbine rotor component 200 includes an inner disk 202, an outer shroud ring 204, and a plurality of turbine blades 206 coupled to and extending between the inner disk 202 and the outer shroud ring 204. The outer shroud ring 204 is designed to minimize air loss in the engine 100 as air flows through the turbine section 108.

The turbine blades 206 are preferably single crystal blades, but may be of another suitable alloy, such as directionally solidified, or another type of alloy. When casting the turbine blades 206, the inner disk 202 and outer shroud ring 204 are preferably cast of an equiaxed metal alloy material, such as, for example, a nickel-based super alloy; however, it will be appreciated that the inner disk 202 and outer shroud ring 204 may be made of one or more other materials.

As shown in FIG. 2, each of the turbine blades 206 includes a blade root 208, a blade tip, 210, and an airfoil body 212. The blade root 208 is coupled to the inner disk 202, and the blade tip 210 is coupled to the outer shroud ring 204. In this embodiment, the turbine blades 206 are individually cast of a suitable material, preferably a single crystal nickel super alloy. In this first exemplary embodiment, both the blade root 208 and the blade tip 210 are preferably electroplated with a noble metal, preferably platinum, to prevent oxidation during bi-casting. The turbine blades 206 are assembled into a mold and both, an inner and outer ring is bi-cast encapsulating the blade root 208 and the blade tip 210, respectively. The blade root 208 is preferably bonded to the inner shroud ring, and the blade tip is preferably bonded against an outer ring, via a diffusion bonding process. However, it will be appreciated that one or more different noble metals may be plated onto the blade roots 208 and/or blade tips 210 via any one of a number of different means, and/or that variations in coupling techniques may be used.

The airfoil body 212 extends at least between the blade root 208 and the blade tip 210, and preferably has either a single crystal composition, a directionally solidified composition, or another composition that is resistant to the high temperatures typically encountered in gas turbine engine environments. The airfoil body 212 is most preferably made of a single crystal composition of a nickel-based super alloy; however, the airfoil body 212 can be made of different materials, and/or may have a different composition.

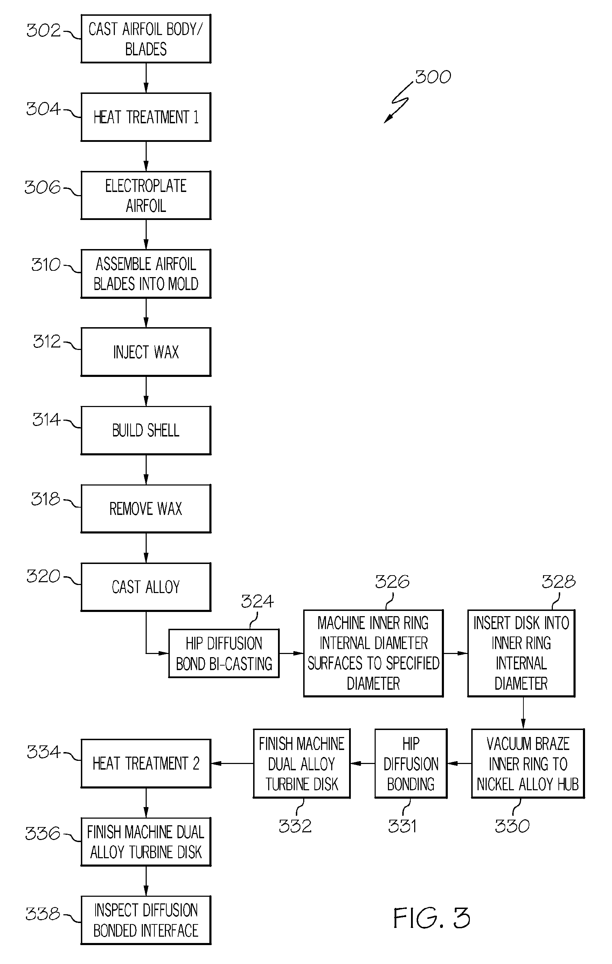

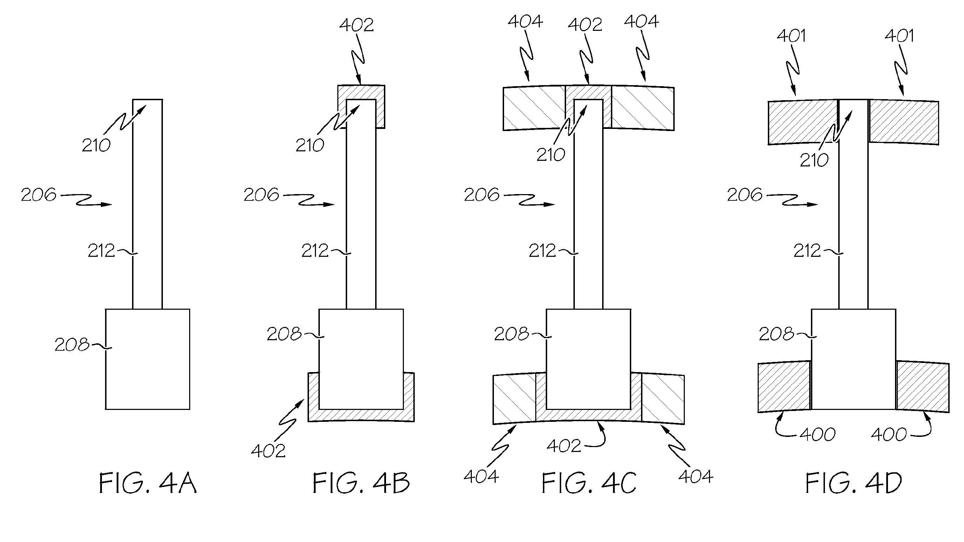

Turning now to FIG. 3, a flowchart is provided for a process 300 for manufacturing the turbine rotor component 200 depicted in FIG. 2. The process 300 will be described below in connection with FIG. 2 as well as FIGs. 4A - 4D, which depict simplified schematic representations of a single turbine blade 206 and portions of an inner ring 400 and an outer ring 401, at various stages of the process 300, in accordance with a first embodiment.

As shown in FIG. 3, the process 300 begins with step 302, in which a plurality of single crystal turbine blades 206 are cast. FIG. 4A depicts one such turbine blade 206 casted in step 302. As shown in Fig. 4A, each turbine blade 206 is cast as either single crystal, or directionally solidified, and is well suited for the high temperatures generally encountered in turbine engines. It will be appreciated that the casting in step 302 can be performed using standard casting techniques known in the art.

Next, in step 304, the as cast turbine blade 206 undergoes a first heat treatment step. The first heat treatment preferably includes a stepwise heat treatment process in a furnace. Sufficient temperatures are preferably used to at least substantially alleviate any residual stress on the turbine blade 206, and to avoid subsequent recrystalization that might otherwise adversely affect turbine blade 206 performance and/or wear.

Following the first heat treatment, in step 306, the blade root 208 and/or the blade tip 210, depending on the embodiment, are electroplated, at least in part, with a noble metal, preferably platinum, to prevent oxidation, during bi-casting, of the surfaces to be diffusion bonded subsequent to the bi-casting operation. As shown in Fig. 4B, in one embodiment the electroplating is conducted on the blade root 208 and the blade tip 210, resulting in multiple plating regions 402. While the blade root 208 and the blade tip 210 are both electroplated with a noble metal in the depicted embodiment, it will be appreciated that this may vary in other embodiments, and that various other steps may correspondingly vary. For example, among other possible variations, in certain other embodiments only one of the blade root 208 or blade tip 210 may be electroplated with a noble metal, and the bi-casting may only apply to one end or the other in such other embodiments, rather than to both ends in the depicted embodiment, as described herein.

Each plating region 402 preferably includes a thin layer of platinum or other noble metal, which prevents oxidation in the area to be bi-cast into an inner ring and/or an outer ring. The noble metal layer of each plating region 402 is preferably less than two millimeters in thickness; however, the thickness of the noble metal layer, and/or various other aspects of the plating regions 402, may vary. The plating regions 402 may cover the entire blade root 208 and/or blade tip 210, or portions thereof. Platinum is preferably used for the electroplating in step 306; however, other noble metals may also be used, instead of or in addition to platinum.

Next, in step 310, the turbine blades 206 are assembled into a mold, preferably in an annular arrangement. Preferably, conventional investment casting processes are used to fabricate a shell for casting, and an inner ring is bi-cast encapsulating the blade root 208, and an outer ring is bi-cast encapsulating the blade tip 210. However, in certain embodiments only an inner ring may be bi-cast. After casting, the bi-cast assembly is HIP diffusion bonded to create a metallurgical bond between the blade root 208 and the inner ring, and between the blade tip 210 and the outer ring. The inner ring is configured to hold the blade root 208 in place for diffusion bonding to an internal disk. The outer ring is preferably machined into a segmented shroud.

It will be appreciated that the shape of the mold, and/or of the turbine rotor component 200 and/or sub-components thereof, may take any one of a number of different shapes and sizes, and that there may be any number of turbine blades 206 and/or other components in each turbine rotor component 200. Next, in step 312, wax is injected into the mold, in the volumes where the inner and outer shroud rings are to be cast.

After the wax is injected into the mold, in step 314 a ceramic shell is built. The shell may be built, using the wax, for the outer and/or inner rings, depending on the embodiment. FIG. 4C depicts a turbine blade 206 with accompanying wax 404 in one such embodiment, in which the wax 404 at least partially surrounds the plating regions 402 proximate the blade tip 210 and the blade root 208. However, similar to the discussion above with respect to step 306, this may vary in other embodiments.

Next, in step 318, the wax is removed, preferably by melting and burning out the wax, for example in an autoclave and a furnace. Next, in step 320 a metal alloy is cast for the inner and outer rings. Preferably an equiaxed metal alloy such as a nickel-based super alloy is used for the casting in step 320; however, it will be appreciated that any one of a number of other metal alloys may be used.

Figure 4D shows a portion of the completed turbine rotor component 200 in one embodiment following step 324, specifically including a turbine blade 206 coupled to the inner ring 400 and outer ring 401. As shown in FIG. 4D, the inner ring 400 is metallurgically bonded to the blade root 208, and the outer ring 401 is metallurgically bonded to the blade tip 210. Upon breaking open the mold the casting is a 360 degree ring of turbine blades 206 held in place at least by the bi-cast inner disk 202.

In addition, in one embodiment, in step 324 the bi-cast assembly is HIP diffusion bonded to create a structural metallurgical bond between the inner disk 202 and the blade roots 208, and an internal diameter of the bi-cast inner disk 202 is machined, in step 326, to a specified diameter and a disk of nickel super alloy is inserted in step 328. The assembly is also then preferably vacuum brazed in step 330 to a nickel alloy hub, in preparation for diffusion bonding. The brazed assembly is HIP diffusion bonded in step 331 using conventional technology creating a metallurgical bond between the outer shroud ring 204 and the inner disk 202, and the machining of the dual alloy turbine disk is continued in step 332.

Next, in step 334, another round of heat treatment is applied, preferably in which the turbine rotor component 200 (including the turbine blades 206, the inner disk 202, and the outer shroud ring 204) are placed into a furnace and undergo a stepwise heat treatment in order to achieve appropriate mechanical properties. After this heat treatment, and the completion of any subsequent machining in step 336, the dual alloy turbine rotor with bi-cast single crystal blades and as-cast segmented shroud is complete. The diffusion bonding interface is then preferably inspected in step 338.

It will be appreciated that the heat treatment steps may vary, and/or may not be necessary, in certain embodiments. It will also be appreciated that various other steps of the process 300 may vary, and/or may be conducted simultaneously or in an order different than that depicted in FIG. 3 and described above.

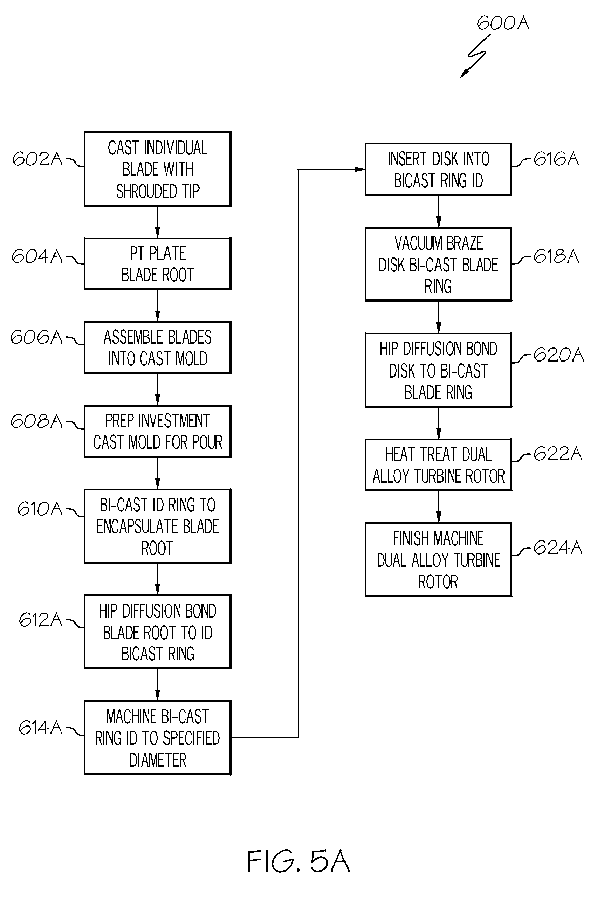

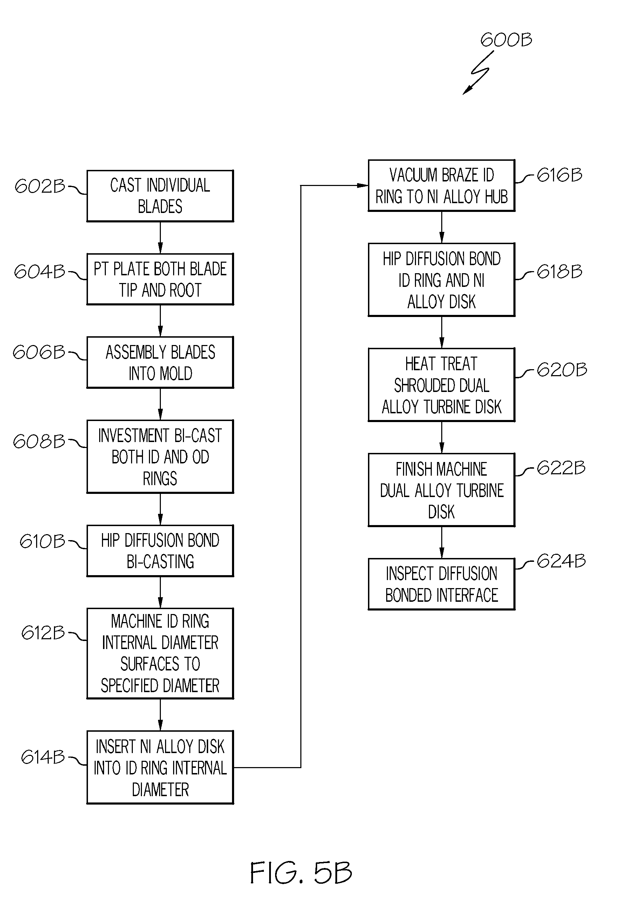

Turning now to FIGs. 5A and 5B, two alternative preferred embodiments 600A and 600B, respectively, of a process for manufacturing a first embodiment and a second embodiment, respectively, of the turbine rotor component 200.

With reference first to the first embodiment 600A depicted in FIG. 5A, a method for manufacturing a first embodiment of the turbine rotor component 200, with a dual alloy turbine rotor with bi-cast internal ring, single crystal airfoils, and as-cast segmented shroud, is provided. First, in step 602A, initial single crystal airfoils with an as-cast shroud are cast using conventional single crystal or directional solidification casting technology. In step 604A, the blade root is plated with platinum or similar noble metal to prevent oxidation, during bi-casting, of the surfaces to be diffusion bonded subsequent to the bi-casting operation. The plated airfoils are then, in step 606A, assembled into a mold. Conventional investment casting processes are used to fabricate a shell for casting, and the investment cast mold is prepared in step 608A. The internal ring is bi-cast in step 610A, encapsulating the airfoil blade root. Upon breaking open the mold the casting is a 360 degree ring of blades held in place by a bi-cast internal ring.

Next, in step 612A, the bi-cast assembly is HIP diffusion bonded to create a structural metallurgical bond between the internal ring and blade roots. The internal diameter of the bi-cast ring is then machined to a specified diameter in step 614A, and a disk of nickel super alloy is inserted in step 616A. Next, in step 618A, the assembly is vacuum brazed in preparation for diffusion bonding. Then, in step 620A, the brazed assembly is HIP diffusion bonded using conventional technology, creating a metallurgical bond between the disk outer diameter and bi-cast ring inner diameter. After subsequent heat treatment (step 622A) and machining (step 624A), the dual alloy turbine rotor with bi-cast single crystal blades and as-cast segmented shroud is complete.

With reference now to the second embodiment 600B depicted in FIG. 5B, the second embodiment of the turbine rotor component 200 is machined to a specified dimension exposing the blade root. In this second embodiment, a nickel alloy disk is inserted into the internal diameter, and a diffusion bonding process is completed to bond the nickel alloy disk to the inner ring internal diameter, resulting in a bi-cast dual alloy turbine rotor with bi-cast shroud and single crystal or similar airfoils.

Specifically, as shown in Fig. 5B, the method 600B for manufacturing this second embodiment begins in step 602B, in which individual blades are cast using conventional single crystal casting technology. Next, in step 604B, both the blade tip and blade root are coated with platinum, or a similar noble metal, to prevent oxidation during bi-casting.

Subsequent to plating, in step 606B the airfoils are assembled into a conventional investment casting mold and shelled. Then, in step 608B, both inner diameter and outer diameter rings are bi-cast. After casting, the bi-cast assembly is HIP diffusion bonded, in step 610B, to create a metallurgical bond between the blade root and inner diameter ring and blade tip and the outer diameter ring. The intent of the inner diameter ring is to hold the blade root in place for diffusion bonding to an internal disk. The outer diameter ring will be machined into a segmented shroud.

Subsequent to HIP diffusion bonding of the bi-cast blade ring the internal surface of the inner diameter ring is machined to a specified diameter in step 612B. A nickel superalloy hub is then inserted, in step 614B, and vacuum brazed in place, in step 616B. Next, in step 618B, the assembly is HIP diffusion bonded to create a metallurgical bond between the disk and internal bi-cast ring. After heat treatment (step 620B), machining (622), and segmenting of the outer diameter bi-cast ring, a dual alloy turbine rotor with integral nickel alloy disk, single crystal blades, and bi-cast segmented shroud results. The diffusion bonded interface is then preferably inspected in step 624B.

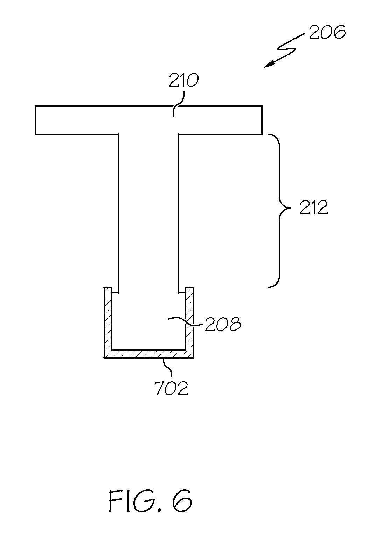

FIGs. 6-9 show a second embodiment of the turbine rotor component 200 during different stages of manufacture. As shown in FIG. 6, the as-cast turbine blades 206 are individually cast and include an airfoil body 212, a blade root 208, and a blade tip 210. The as-cast blade root 208 is plated with a noble metal, such as platinum, to thereby form a platinum coating 702, to prevent oxidation during bi-casting.

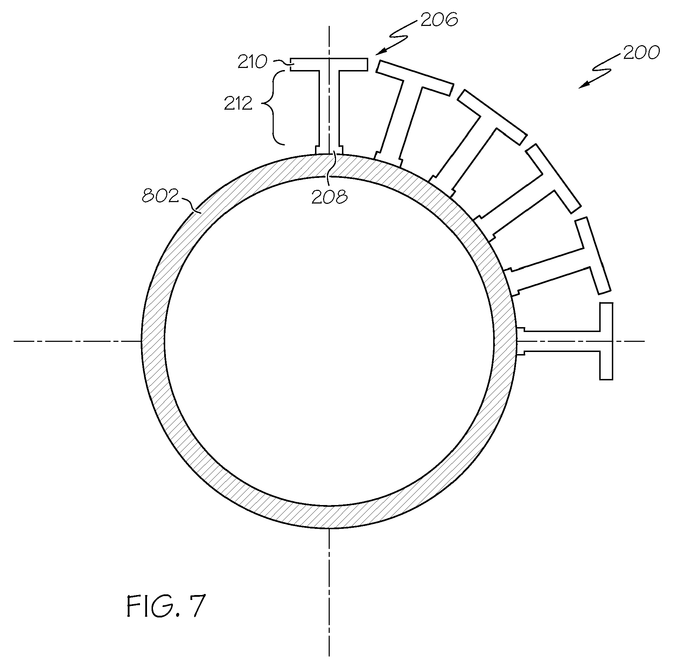

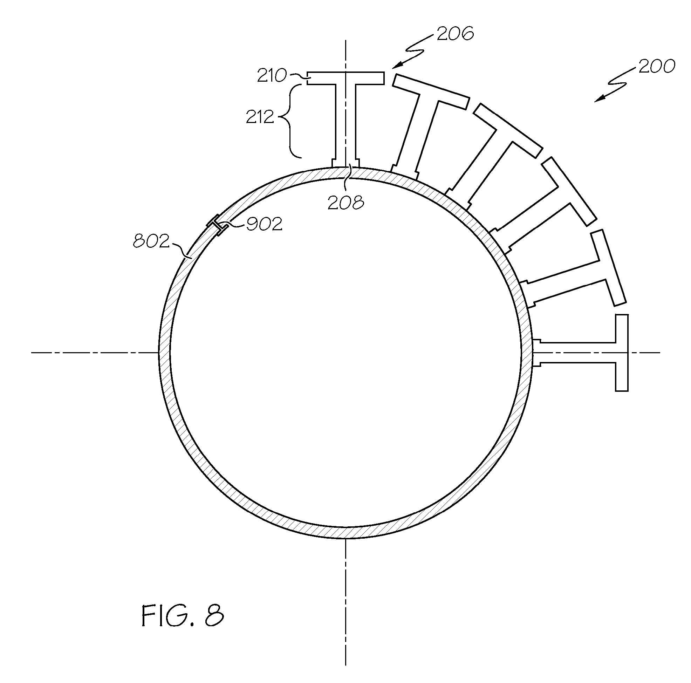

As shown in FIG. 7, in this second embodiment a plurality of such as-cast turbine blades 206 are assembled into a ring, and an inner ring 802 is bi-cast encapsulating a blade root 208. The turbine rotor component 200 thus takes the form of a bi-cast blade ring assembly comprising an inner ring 802, an airfoil body 212, and an as-cast blade tip 210. The inner ring 802 is bi-cast of a preferably equiaxed metal alloy material, such as, for example, a nickel-based super alloy. The bi-cast inner ring 802 is then diffusion bonded using process well known in the art such as HIP, or any one of various other techniques known in the art, preferably yielding a monolithic, diffusion bonded, bi-cast, shrouded blade ring. Also, as shown in FIG. 8, an inner ring internal diameter 902 is machined to a specified diameter exposing the as-cast blade root 208 on an internal diameter of the inner ring 802.

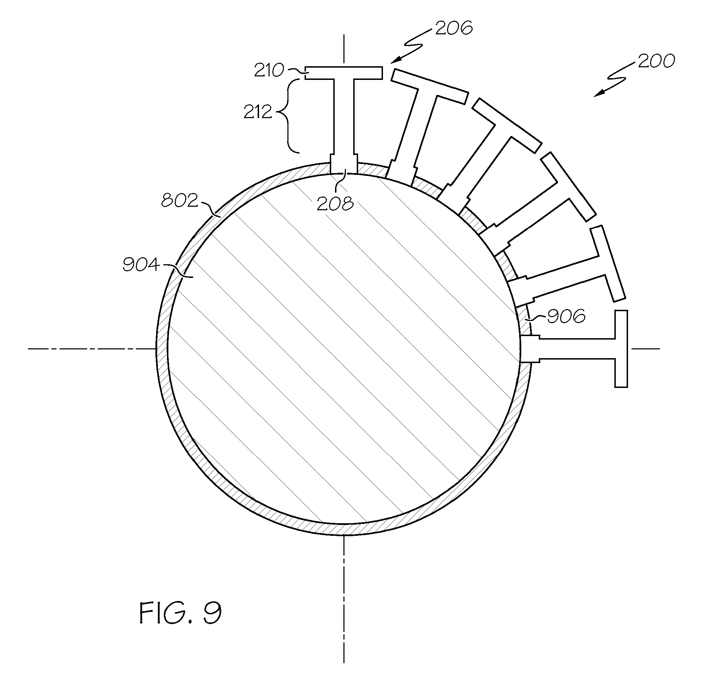

As shown in FIG. 9, a nickel alloy hub 904 is inserted into the inner ring 802. A diffusion bonding process is preferably completed to bond the nickel alloy hub to the inner ring internal diameter 902 using one or more processes known in the art, such as HIP, and/or one or more other processes. After final machining the assembly comprises a dual alloy turbine disk comprising a fine grain nickel alloy hub 904, a plurality of single crystal airfoil turbine blades 206, and remnant bi-cast material between turbine blades 206 to be bonded to a disk 906. It will be appreciated that the turbine rotor component 200 and/or various components thereof can also take various other forms in various stages of development in other embodiments, and/or can be implemented in connection with any number of different types of devices and/or systems.

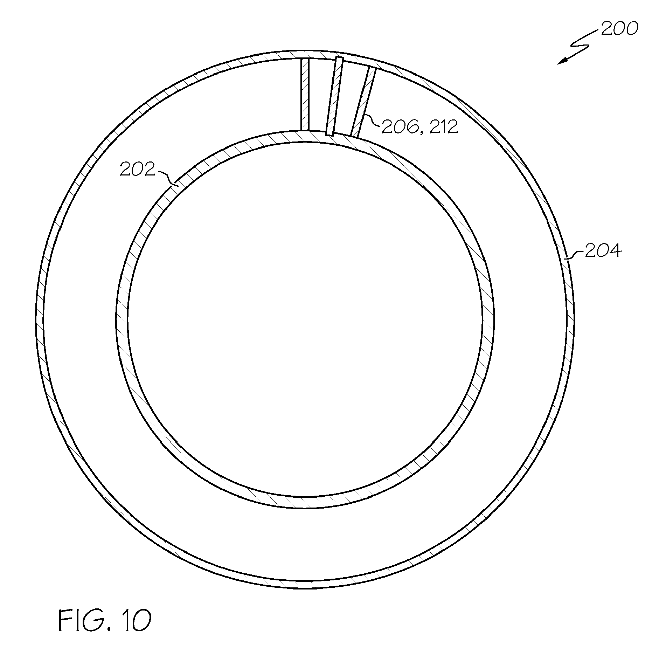

Finally, FIG. 10 depicts the turbine rotor component 200 in accordance with the first exemplary embodiment discussed further above (including a bi-cast inner ring and a bi-cast outer shroud ring) after the diffusion bonding process is completed, and the turbine rotor component 200 is formed into a monolithic assembly. It will be appreciated these figures, and various portions of the turbine rotor component 200 and/or the methods for manufacturing the turbine rotor component 200, may vary in other embodiments.

The processes 300, the turbine rotor component 200, and the steps and components thereof are potentially advantageous for any number of different turbine jet engines 100 and/or other engines or systems. For example, the turbine rotor component 200 has a relatively high melting point and can withstand high temperatures typically encountered in turbine engine environments, due at least in part to the preferred single crystal composition of at least the airfoil body 212, and the optimal heat treatment enabled by the process 300 and the turbine rotor component 200 to prevent recrystalization. In addition, the metallurgical bonding, the preferred structure of the turbine rotor component 200 as a monolithic material when completed, and the use of a platinum or other noble metal plating, among other features, helps to further alleviate stress, withstand centrifugal forces, reduce wear, prevent oxidation that can interfere with desired bonding, and reduce costs and/or unwanted mechanical issues.

While the invention has been described with reference to a preferred embodiment, it will be understood by those skilled in the art that various changes may be made and equivalents may be substituted for elements thereof without departing from the scope of the invention. In addition, many modifications may be made to adapt to a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A turbine engine component (200) for a gas turbine engine (100), the turbine engine component (200) comprising:
an inner disk (202);
an outer shroud (204); and
a plurality of blades (206), each blade (206) comprising:
a blade root (208) plated at least in part with a noble metal and coupled to the inner disk (202); and
an airfoil body (212) extending at least partially between the blade root (208) and the outer shroud (204).

2. The turbine engine component (200) of Claim 1, wherein the blade root (208) of each blade (206) is coupled to the inner disk (202) via a diffusion bonding process.

3. The turbine engine component (200) of Claim 1, wherein each blade (206) further comprises a blade tip (210) plated at least in part with a noble metal and coupled to the outer shroud (204) via a diffusion bonding process.

4. The turbine engine component (200) of Claim 1, wherein each blade (206) further comprises a blade tip (210), the blade tips (210) collectively forming the outer shroud (204).

5. A gas turbine engine (100), comprising:
a compressor (104) having an inlet and an outlet and operable to supply compressed air;
a combustor (106) coupled to receive at least a portion of the compressed air from the compressor outlet and operable to supply combusted air; and
a turbine (108) coupled to receive the combusted air from the combustor (106) and at least a portion of the compressed air from the compressor (104), the turbine (108) comprising:
an inner disk (202);
an outer shroud (204); and
a plurality of blades (206), each blade (206) comprising:
a blade root (208) plated at least in part with a noble metal and coupled to the inner disk (202); and
an airfoil body (212) extending at least partially between the blade root (208) and the outer shroud (204).

6. The gas turbine engine (100) of Claim 5, wherein each blade (206) further comprises a blade tip (210) plated at least in part with a noble metal and coupled to the outer shroud (204) via a diffusion bonding process.

7. The gas turbine engine (100) of Claim 5, wherein each blade (206) further comprises a blade tip (210), the blade tips (210) collectively forming the outer shroud (204).

8. A method (300) of manufacturing a turbine engine component (200), the method (300) comprising the steps of:
(a) casting a plurality of blades (206), each blade (206) including a blade root (208) configured to be coupled to an inner disk (202);
(b) plating the blade root (208) of each blade (206) at least in part with a noble metal; and
(c) diffusion bonding the blade root (208) of each blade (206) to the inner disk (202).

9. The method (300) of Claim 8, wherein the blade root (208) of each blade (206) is cast in step (a) to include a blade tip (210), the blade tips (210) collectively forming an outer shroud (204).

10. The method (300) of Claim 8, wherein the blade root (208) of each blade (206) is cast in step (a) to include a blade tip (210), and the method (300) further comprises the steps of:
(d) plating the blade tip (210) of each blade (206) at least in part with a noble metal; and
(e) diffusion bonding the blade tip (210) of each blade (206) to an outer shroud (204).
